# EUROPÄISCHE PATENTSCHRIFT

(11) **EP 0 448 814 B1**
(45) Veröffentlichungstag und Bekanntmachung des Hinweises auf die Patenterteilung: **21.06.1995**
(21) Anmeldenummer: 90124688.4
(22) Anmeldetag: 19.12.1990
(51) Int. Cl.: C08G 63/197, C08G 63/64

(54) **Polyester und Polyestercarbonate auf Basis von 3,8-Dihydroxy-5a, 10b- diphenylcumarano-2',3', 2, 3-cumaran**
Polyesters and polyester carbonates based on 3,8-dihydroxy-5a, 10b-diphenylcumarano-2',3',2,3-cumaran
Polyester et polyestercarbonates à base de 3,8-dihydroxy-5a, 10b-diphénylcumarano-2',3',2,3-cumaran

(30) Priorität: 29.03.1990 DE 4010029
(43) Veröffentlichungstag der Anmeldung: 02.10.1991
(73) Patentinhaber: BAYER AG, 51368 Leverkusen (DE)
(72) Erfinder: Serini, Volker, Dr., W-4150 Krefeld (DE); Buysch, Hans-Josef, Dr., W-4150 Krefeld (DE); Grigo, Ulrich, Dr., W-4152 Kempen 3 (DE)

(56) Entgegenhaltungen:
- EP-A- 0 314 007
- DE-A- 3 804 988

## Beschreibung

Gegenstand der Erfindung sind Polyester und Polyestercarbonate aus
a) aromatischen Diphenolen,
b₁) aliphatischen und/oder cycloaliphatischen und/oder aromatischen Dicarbonsäuren und gegebenenfalls
b₂) Kohlensäure,
enthaltend b₁) in einer Menge von 5 bis 100 Mol-% und b₂) in einer Menge von 0 bis 95 Mol-%, bezogen auf (b₁ + b₂), worin a) zu 10 bis 100 Mol-% aus 3,8-Dihydroxy-5a,10b-diphenylcumarano-2',3',2,3-cumaran der Formel (I) besteht.

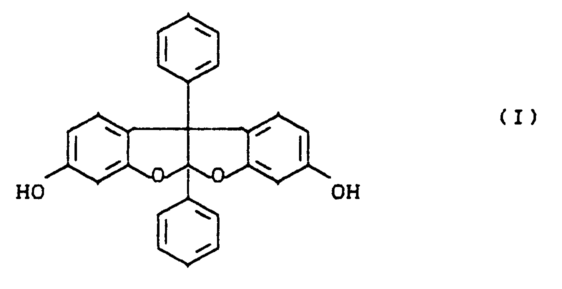

Die erfindungsgemäßen Polyester und Polyestercarbonate besitzen gegenüber bekannten Polyestern und Polyestercarbonaten, z.B. gegenüber solchen aus Bisphenol-A und aus 1,1-Bis-(4-hydroxyphenyl)-cyclohexan, überraschend gute Eigenschaften, die für die Technik von großer Bedeutung sind.

So weisen sie, auch schon bei kleinen Anteilen an einkondensierten Bisphenolen der Formel (I), überraschend hohe Glastemperaturen T_{g} auf. Weiterhin zeigen sie eine gute Wäremeoxidationsbeständigkeit und hohe Flammwidrigkeit.

Die Dihydroxyverbindung der Formel (I) ist bekannt (vgl. J. Am. Chem. Soc. 63, 580 (1941) (Struktur dort falsch zugeordnet), Rec. Trav. Chim. 87, 599 (1968), DE-A-3 804 988 und EP-A-314 007); sie wird durch Kondensation von Benzil mit Resorcin in Gegenwart saurer Katalysatoren (z.B. Schwefelsäure, saure Kationenaustauscherharze) hergestellt.

Aromatische Diphenole (a), die neben dem Diphenol der Formel I für den Aufbau der erfindungsgemäßen Polyester und Polyestercarbonate verwendet werden können, sind beispielsweise:
Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, α,α'-Bis-(hydroxyphenyl)-isopropylbenzole, Pentamethyl-(hydroxyphenyl)-indanole, sowie entsprechende kernsubstituierte Verbindungen.

Diese und weitere geeignete aromatische Dihydroxyverbindungen sind z.B. in Hermann Schnell, "Chemistry and Physics of Polycarbonates", Polymer Reviews 9, Interscience Publishers, New York 1964; in V. Serini, D. Freitag und H. Vernaleken, "Polycarbonate aus o,o,o',o'-tetramethylsubstituierten Bisphenolen", Angewandte Makromolekulare Chemie 55 (1976) 175-189, in den US-A-3 028 365, 2 999 835, 3 148 172, 3 271 368, 2 991 273, 3 271 367, 3 780 078, 3 014 891 und 2 999 846, in den DE-A-1 570 703, 2 063 050, 2 063 052, 2 211 957, 2 402 175, 2 402 176, 2 402 177 und in der FR-A-1 561 518 beschrieben.

Bevorzugt als Diphenole sind
Hydrochinon, Bis-(4-hydroxyphenyl), 2,2-Bis-(4-hydroxyphenyl)-propan, Bis-(4-hydroxyphenyl)-sulfid, Bis-(4-hydroxyphenyl)-ether, Bis-(4-hydroxyphenyl)-keton, Bis-(4-hydroxyphenyl)-sulfon, Bis-(4-hydroxyphenyl)-methan, 1,1-Bis-(4-hydroxyphenyl)-cyclohexan, α,α'-Bis-(4-hydroxyphenyl)-p-diisopropylbenzol, 1,1-Bis-(4-hydroxyphenyl)-1-phenyl-ethan, 2,2-Bis-(3-methyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 2,2-Bis-(3,5-dimethyl-4-hydroxyphenyl)-propan, Bis-(3,5-dimethyl-4-hydroxyphenyl)-methan, 2,2-Bis-(3,5-dimethyl-4-hydroxyphenyl)-butan, Bis-(3,5-dimethyl-4-hydroxyphenyl) und 1,1,3,4,6-Pentamethyl-3-(3,5-dimethyl-4-hydroxyphenyl)-indan-5-ol, besonders bevorzugt Bis-(4-hydroxyphenyl), 2,2-Bis-(4-hydroxyphenyl)-propan und 2,2-Bis-(3,5-dimethyl-4-hydroxyphenyl)-propan, ganz besonders bevorzugt 2,2-Bis-(4-hydroxyphenyl)-propan.

Aliphatische, cycloaliphatische und aromatische Dicarbonsäuren (b₁), die für den Aufbau der erfindungsgemäßen Polyester und Polyestercarbonate geeignet sind, sind beispielsweise:
Oxalsäure, Malonsäure, Bernsteinsäure, Glutarsäure, Adipinsäure, Pimelinsäure, Suberinsäure, Azelainsäure, Sebazinsäure, Nonandicarbonsäure, Decandicarbonsäure, Dodecandicarbonsäure, Octadecandicarbonsäure, Dimethylmalonsäure, Dimerfettsäure, 1,4-Cyclohexandicarbonsäure, Tetrahydroterephthalsäure, Tetrahydroisophtalsäure, Tetrahydrophthalsäure, 3,6-Endomethylentetrahydrophthalsäure, o-, m-, p-Phenylendiessigsäure, Orthophthalsäure, Terephthalsäure, Isophthalsäure, tert.-Butylisophthalsäure, 3,3'-Diphenyldicarbonsäure, 4,4'-Diphenyldicarbonsäure, 4,4'-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5-dicarbonsäure.

Bevorzugt werden die erfindungsgemäßen Polyester und Polyestercarbonate aus aromatischen Dicarbonsäuren hergestellt. Von den aromatischen Dicarbonsäuren werden besonders bevorzugt die Terephthalsäure und/oder Isophthalsäure eingesetzt. Ganz besonders bevorzugt ist die Terephthalsäure.

Die erfindungsgemäßen Polyester und Polyestercarbonate bestehen zu 10 bis 100 Mol.-% aus Diphenolen der Formel (I). Von den Polyestern und Polyestercarbonaten werden die mit 10 bis 50 Mol.-% und 55 bis 100 Mol.-% aromatischen Diphenolen der Formel (I) bevorzugt, die mit 10 bis 40 Mol.-% und 70 bis 100 Mol.-% aromatischen Diphenolen der Formel (I) besonders bevorzugt, die mit 15 bis 35 Mol.-% und 85 bis 100 Mol.-% aromatischen Diphenolen der Formel (I) ganz besonders bevorzugt und insbesondere die mit 100 Mol.-% aromatischen Diphenolen der Formel (I) bevorzugt.

Bevorzugt werden die erfindungsgemäßen Polyestercarbonate, in denen die Dicarbonsäuren (b₁) in einer Menge von 5 bis 98 Mol.-%, bevorzugt von 15 bis 95 Mol.-%, besonders bevorzugt von 20 bis 50 Mol.-% und 60 bis 95 Mol.-% und insbesonders von 25 bis 45 Mol.-% und 80 bis 95 Mol.-%, bezogen auf die Summe der Dicarbonsäuren (b₁) und der Kohlensäure (b₂), enthalten sind.

Die erfindungsgemäßen Polyester und Polyestercarbonate können nach bekannten Verfahren hergestellt werden, z.B. durch Polykondensation in homogener Lösung, durch Schmelzumesterung und durch Zweiphasengrenzflächenpolykondensation. Bevorzugt werden Schmelzumesterung und insbesondere die Zweiphasengrenzflächenpolykondensation angewandt.

Die Herstellung von Polyestern und Polyestercarbonaten in homogener Lösung wird beispielsweise beschrieben in DE-A-1 420 475, US-PS 3 169 121 und US-A-4 156 069 und in Polymer Reviews, Volume 10, Condensation Polymers by Interfacial and Solution Methods, Paul W. Morgan, Interscience Publishers New York 1965, Kap. VIII, S. 325 ff, Polyester.

So können beispielsweise Polyester durch Umsetzung von Dicarbonsäuredichloriden mit aromatischen Dihydroxyverbindungen in Gegenwart von Pyridin als Säureacceptor und Pyridin oder chlorierten Kohlenwasserstoffen wie Methylenchlorid und Chlorbenzol als Lösemitteln hergestellt werden.

Polyestercarbonate können beispielsweise ebenso in homogener Lösung hergestellt werden, indem Phosgen, Dicarbonsäure und aromatische Dihydroxyverbindung oder Phosgen, Dicarbonsäuredichlorid und aromatische Dihydroxyverbindung als Monomere eingesetzt werden. Die Reaktion verläuft schon bei niedrigen Temperaturen, z.B. bei 10 bis 40°C, ausreichend schnell.

Schmelzumesterungsverfahren zur Herstellung von Polyestern und Polyestercarbonaten sind beispielsweise das Acetat-Verfahren und das Phenylester-Verfahren.

Das Acetatverfahren wird beispielsweise beschrieben in US-A-3 494 885, 4 386 186 und EP-A-26 120, 26 121, 26 684, 28 030, 39 845, 91 602, 97 970 sowie in Polyesters, V.V. Korshak und S.V. Vinograda, Pergamon Press, Oxford, 1965, und in V.V. Korshak und S.V. Vinograda, Chemiefasersymp., Abh. d. Akad. Wiss. Berlin 1 (1963) 355 ff. Bei diesem Verfahren werden im allgemeinen bei Temperaturen von 200 bis 400°C Bisacetate von aromatischen Dihydroxyverbindungen, z.B. Bisphenol-A-diacetat, mit Dicarbonsäuren, z.B. aromatischen Di-carbonsäuren, wie Isophthalsäure und Terephthalsäure, in der Schmelze unter Abspaltung von Essigsäure zu aromatischen Polyestern umgesetzt. Dabei können zur Verbesserung der Schmelzfließfähigkeit des Polyesters während des Prozesses und zur Verhinderung einer Dicarbonsäuresublimation Hilfslösemittel eingesetzt werden, z.B. Diphenylether, substituierte Cyclohexane und Decahydronaphthalen.

Die Reaktion kann gegebenenfalls katalysiert werden, z. B. mit Verbindungen von Alkalimetallen, Erdalkalimetallen, Ti, Zn, Sn, Sb und Mn. Die Kondensation kann, insbesondere bei kristallisierenden Polyestern, auch in der Schmelze nur bis zu einem noch leicht fließenden Präpolymer geführt werden, welches dann unterhalb seines Schmelzpunktes bis zum gewünschten Kondensationsgrad in fester Phase weiter kondensiert wird. Dabei wird im allgemeinen nur wenig unterhalb des Polymerschmelzpunktes bei reduziertem Druck weiter Essigsäure abgespalten und entfernt und so das Polymere weiter aufgebaut.

Das Phenylesterverfahren zur Herstellung von aromatischen Polyestern und Polyestercarbonaten wird beispielsweise beschrieben in US-A-4 661 580, 4 680 371, 4 680 372, EP-A-79 075, 146 887, 156 103, 234 913, 234 914, 240 301 und DE-B 1 495 626, 2 232 877.

Bei diesem Verfahren werden im allgemeinen bei Temperaturen von 200 bis 400°C aromatische Dihydroxyverbindungen, z.B. Bisphenol-A, mit aromatischen Dicarbonsäureestern, z.B. Isophthalsäurediphenylester und Terephthalsäurediphenylester, in der Schmelze unter Phenolabspaltung zu aromatischen Polyestern umgesetzt. Zur Herstellung von Polyestern nach diesem Verfahren können auch aromatische Dihydroxyverbindungen, Dicarbonsäuren und Diester der Kohlensäure, wie Diphenylcarbonat, als Ausgangsstoffe umgesetzt werden. In diesem Fall werden die für die Reaktion benötigten Phenylester der Dicarbonsäuren intermediär unter CO₂-und Phenolabspaltung gebildet.

Zur Herstellung von Polyestercarbonaten nach dem Phenylesterverfahren werden im allgemeinen zusätzlich zu den Diestern der Dicarbonsäuren Diester der Kohlensäure eingesetzt, wie Diphenylcarbonat. Es können jedoch auch nur aromatische Dihydroxyverbindungen, Dicarbonsäuren und Diphenylcarbonat für die Polyestercarbonatherstellung eingesetzt werden. Bei der Polyestercarbonatherstellung ist im allgemeinen die Molmenge der eingesetzten Diester von Dicarbonsäuren und Dicarbonsäuren kleiner als die Molmenge der eingesetzten Bisphenole. Auch bei den Phenylesterverfahren können Katalysatoren zur Beschleunigung der Kondensationsreaktion verwendet werden, können Hilfslösemittel eingesetzt werden und kann ein Präpolymer hergestellt und in fester Phase nachkondensiert werden. Katalysatoren und Hilfslösemittel können dieselben sein, wie für das Acetatverfahren.

Die Zweiphasengrenzflächenpolykondensation zur Herstellung von Polyestern und Polyestercarbonaten wird beispielsweise beschrieben in EP-A-68 014, 88 322, 134 898, 151 750, 182 189, 219 708, 272 426 und DE-A-2 940 024, 3 007 934, 3 440 020 und in Polymer Reviews, Volume 10, Condensation Polymers by Interfacial and Solution Methods, Paul W. Morgan, Interscience Publishers New York 1965, Kap. VIII, S. 325, Polyester.

Als Ausgangsstoffe für die Herstellung der erfindungsgemäßen Polyester und Polyestercarbonate durch Zweiphasengrenzflächenpolykondensation dienen bevorzugt aromatische Dihydroxyverbindungen, Dicarbonsäuredichloride und Phosgen.

Auch der Einsatz von Terephthalsäure und/oder Isophthalsäure ist beim Zweiphasengrenzflächenverfahren möglich, wobei intermediär mit Hilfe von Phosgen Dicarbonsäurechloride bzw. -dichloride gebildet werden.

Bei der Zweiphasengrenzflächenpolykondensation bildet sich das Polykondensat an der Grenzfläche zwischen einer wäßrig-alkalischen Lösung und einem mit Wasser nicht mischbare organische Lösungsmittel. Beispielsweise wird die aromatische Dihydroxyverbindung, in wäßrigem Alkali als Diphenolat gelöst, mit dem Dicarbonsäuredichlorid und gegebenenfalls Phosgen, gelöst im organischen Lösungsmittel, unter Rühren umgesetzt. Der sich bildende Polyester bzw. das sich bildende Polyestercarbonat lösen sich im organischen Lösungsmittel. Wenn Dicarbonsäuredichlorid und Phosgen eingesetzt werden, (also Polyestercarbonate hergestellt werden), kann beispielsweise zunächst nur Dicarbonsäurechlorid mit dem Alkalibisphenolat umgesetzt werden und dann erst das für die Vollendung der Polykondensation benötigte Phosgen zugesetzt werden. Es können auch das Dicarbonsäuredichlorid und ein Teil des benötigten Phosgens gemeinsam mit dem Bisphenolat umgesetzt werden und dann der Rest des benötigten Phosgens zugesetzt werden. Die Polykondensation erfordert im allgemeinen einen Katalysator. Der Katalysator, unten näher beschrieben, kann beispielsweise zugesetzt werden, wenn die Dicarbonsäurechloride und das Phosgen bereits eine gewisse Zeit mit dem Alkalibisphenolat reagiert haben. Er kann jedoch auch schon, zumindest teilweise, gleich zu Beginn der Reaktion eingesetzt werden. Es können auch verschiedene Katalysatoren in einer Kondensationsreaktion verwendet werden, wobei auch deren Zugabezeitpunkt verschieden sein kann. Im allgemeinen wird bei der Polykondensation das Molekulargewicht mit Kettenbegrenzern eingestellt. Zur Erzielung bestimmter Eigenschaften, z.B. von Strukturviskosität, können Verzweiger eingesetzt werden. Auch Antioxidantien können, z.B. zur Erzielung sehr farbheller Polykondensate, zugesetzt werden.

Als mit Wasser nicht mischbare organische Lösungsmittel können beispielsweise chlorierte Kohlenwasserstoffe, wie Chloroform, Dichlorethan, Tri- und Tetrachlorethylen, Tetrachlorethan, Dichlormethan, Chlorbenzol und Dichlorbenzol, aber auch nicht chlorierte Kohlenwasserstoffe, wie Toluol und Xylol, eingesetzt werden. Bevorzugt werden Chlorbenzol oder Dichlormethan oder Mischungen von beiden verwendet.

Als Kettenbegrenzer werden z.B. sekundäre Amine, Phenole und Säurechloride eingesetzt. Bevorzugt werden Phenole, wie Phenol und Alkylphenol, besonders bevorzugt solche mit C₁-C₁₂-Alkylgruppen, wie p-tert.-Butylphenol, m- und p-3,5-Dimethyl-heptyl-phenol und m- und p-1,1,3,3-Tetramethylbutylphenol sowie Hydroxydiphenyl und p-Cumenylphenol verwendet. Ganz besonders bevorzugt ist das p-1,1,3,3-Tetramethylbutylphenol (p-Isooctylphenol).

Falls Verzweiger benutzt werden, können vorzugsweise 0,05 bis 3,0 Mol.-% (bezogen auf eingesetzte Diphenole), an drei-oder mehr als dreifunktionellen Verbindungen, insbesondere solchen mit drei oder mehr als drei phenolischen Hydroxylgruppen, verwendet werden. Einige geeignete Verzweiger mit phenolischen Hydroxylgruppen sind
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan
und
1,4-Bis-((4'-,4''-dihydroxytriphenyl)-methyl)-benzol.

Einige weitere Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Katalysatoren können z.B. tertiäre Amine und/oder Phasentransferkatalysatoren, wie quartäre Ammonium-und Phosphoniumverbindungen und/oder Kronenether eingesetzt werden. Bevorzugte Katalysatoren sind beispielsweise N-Ethylpiperidin, Tetrabutylammoniumbromid und/oder Triphenylbenzylphosphoniumbromid.

Die erfindungsgemäßen Polyester und Polyestercarbonate weisen im allgemeinen mittlere Molekulargewichte M̅w von mindestens 10 000, vorzugsweise von 10 000 bis 400 000 und insbesondere von 15 000 bis 80 000 und 100 000 bis 250 000 auf.

Den erfindungsgemäßen Polyestern und Polyestercarbonaten können vor oder während ihrer Verarbeitung zu Formkörpern die für thermoplastische Polyester und Polyestercarbonate üblichen Additive, wie z.B. Stabilisatoren, Entformungsmittel, Pigmente, Brandschutz-Additive, Antistatika, Leitfähigkeitszusätze, Füllstoffe und Verstärkungsstoffe in den üblichen Mengen zugesetzt werden.

Im einzelnen können beispielsweise Graphit, Ruß, Metallfasern, Metallpulver, Kieselgur, Quarz, Kaolin, Tone, CaF₂, CaCO₃, Aluminiumoxide, Glasfasern, C-Fasern, Keramikfasern und anorganische Pigmente eingesetzt werden, sowie als Entformungsmittel beispielsweise Ester mehrwertiger Alkohole mit langkettigen Carbonsäuren wie Glycerinstearate, Pentaerythrittetrastearat und Trimethylolpropantristearat.

Die erfindungsgemäßen Polycarbonate können nach den Regeln der thermoplastischen Verarbeitung, z.B. durch Spritzguß, Extrusion, Blasverformen, Rotationsguß, Warmverpressen oder Tiefziehen thermoplastisch zu Formkörpern verarbeitet werden, wobei man beispielsweise die oben genannten Additive zufügen kann. Unter Formkörpern werden z.B. spritzgegossene Formkörper unterschiedlichster Geometrie, extrudierte Formkörper, wie Profile, Rohre, Platten, Fasern und Folien, blasverformte Körper, wie Flaschen, Behälter und Beleuchtungskörper, sowie tiefgezogene Formkörper verstanden.

Die erfindungsgemäßen Polyester mit Molekulargewichten M̅_{w} von 15 000 bis 80 000 werden bevorzugt aus der Schmelze und die mit Molekulargewichten M̅_{w} von 100 000 bis 250 000 bevorzugt aus der Lösung verarbeitet.

Die Polyester und Polyestercarbonate der Erfindung, insbesondere die mit Molekulargewichten M̅w = 100 000 bis 250 000, eignen sich besonders zur Herstellung von hochwertigen Gießfolien, da sie sich besonders gut dazu verarbeiten lassen (gute Ablösbarkeit von der Gießtrommel, geringe elektrostatische Aufladung bei der Ablösung von der Gießtrommel, Gleichmäßigkeit der Oberfläche) und besonders gute Eigenschaften zeigen, auch bei Folien stärken von 0,5-200 »m, bevorzugt 0,5-100 »m, ganz besonders bevorzugt von 1-25 »m und insbesondere 2-10 »m. Wegen ihres geringen Schrumpfes bei hohen Temperaturen eignen sich die Folien besonders als lötbadfeste Folien und wegen ihrer guten Elektroisoliereigenschaften besonders als Elektroisolierfolien, beispielsweise als Kondensatorfolien und als Kabelisolierungen. Durch Verstreckung der Folien (z.B. monoaxial oder biaxial) können die Eigenschaften der Folien weiter verbessert werden.

Die Folien, z.B. durch Extrusion aus der Schmelze oder Gießen aus der Lösung erhältlich, können auch zusammen mit anderen Folien zu Verbundfolien verarbeitet werden. Weiterhin können die erfindungsgemäßen Polycarbonate auch in anderen Verbundwerkstoffen eingesetzt werden, z.B. in Kombination mit Fasern und anderen Polymeren.

Die Polyester und Polyestercarbonate der Erfindung eignen sich aufgrund ihrer hohen Wärmestandfestigkeit, Wärmeoxidationsbeständigkeit und Flammwidrigkeit besonders für Elektrogeräte (insbesondere bei hohen Temperaturen), Beleuchtungskörper und für Formteile im Automobilmotorraum. So können aus ihnen mit Vorteil elektrische Isolatoren, Lampenhalterungen, Reflektoren für Leuchten und Halterungen im Motorraum angefertigt werden.

### Beispiel 1: Polyester

In 10 l Wasser wurden unter Rühren 80,8 g NaOH (2,02 Mol), 4,52 g N-Ethylpiperidin (0,04 Mol) und 394 g (1 Mol) 3,8-Dihydroxy-5a,10b-diphenylcumarano-2',3',2,3-cumaran, im folgenden DC genannt, gelöst. Dazu wurden unter weiterem Rühren 5 l Methylenchlorid gegeben, in dem 203 g Terephthalsäuredichlorid (1 Mol) gelöst enthalten waren. Dann wurde noch eine Stunde weitergerührt. Die Temperatur wurde bei 20 bis 35°C gehalten. Anschließend wurde die organische Phase abgetrennt und die bisphenolatfreie wäßrige alkalische Phase verworfen. Die organische Phase wurde mit verdünnter wäßriger Phosphorsäure und anschließend mehrfach mit destilliertem Wasser gewaschen, bis sie elektrolytfrei war. Durch Abdampfen des Methylenchlorids aus der organischen Phase wurde ein farbloser Polyester erhalten, der noch 15 Stunden bei 130°C im Vakuum von Resten Methylenchlorid befreit wurde. Relative Viskosität ηᵣₑₗ = 2,231 (gemessen in Methylenchlorid bei 25°C, c = 5 g/l Lösung). Die Differentialthermoanalyse ergab für die Glasübergangstemperatur des Polyesters T_{g} = 351°C.

### Beispiel 2: Polyester

Beispiel 1 wurde mit folgenden Änderungen wiederholt: Terephthalsäuredichlorid 207,5 g (1,022 Mol). NaOH 82,6 g (2,064 Mol). Zusätzlich wurden 9,1 g (0,044 Mol) p-(1,1,3,3-Tetramethylbutyl)-phenol eingesetzt (gemeinsam mit Terephthalsäuredichlorid in Methylenchlorid gelöst).
ηᵣₑₗ = 1,306 (gemessen in Methylenchlorid bei 25°C, c = 5 g/l Lösung). Die Differentialthermoanalyse ergab für die Glasübergangstemperatur des Polyesters T_{g} = 346°C.

### Beispiel 3: Polyester

Beispiel 1 wurde mit folgender Änderung wiederholt: Das Terephthalsäuredichlorid wurde durch Isophthalsäuredichlorid (gleiche Menge) ersetzt.
ηᵣₑₗ = 1,957 (gemessen in Methylenchlorid bei 25°C, c = 5 g/l Lösung). Die Differentialthermoanalyse ergab für die Glasübergangstemperatur des Polyesters T_{g} = 328°C.

### Beispiel 4: Polyester

Beispiel 2 wurde mit folgender Änderung wiederholt: 0,5 Mol des eingesetzten DC wurden durch 0,5 Mol (114 g) 2,2-Bis-(4-hydroxyphenyl)-propan ersetzt.
ηᵣₑₗ = 1,314 (gemessen in Methylenchlorid bei 25°C, c = 5 g/l Lösung). Die Differentialthermoanalyse ergab für die Glasübergangstemperatur des Polyesters T_{g} = 294°C.

### Beispiel 5: Polyestercarbonat

Zu einer Lösung von 80,8 g (2,02 Mol) NaOH, 4,52 g (0,04 Mol) N-Ethylpiperidin und 394 g (1,0 Mol) DC in 10 l Wasser wurden unter Rühren bei 25-35°C 5 l Methylenchlorid zugetropft, worin 182,7 g (0,90 Mol) Terephthalsäuredichlorid gelöst waren. Nach einstündigem Nachrühren wurden 128 g (3,2 Mol) NaOH als konzentrierte Lösung zugegeben, 40 g (0,40 Mol) Phosgen eingeleitet und noch 30 Min. gerührt. Nach Aufarbeitung wie in Beispiel 1, erhielt man ein Polyestercarbonat mit ηᵣₑₗ = 2,736 (25°C, c = 5 g/l Lösung in Methylenchlorid) und einer Glasübergangstemperatur von 345°C.

### Beispiel 6: Polyestercarbonat

Mit folgenden Änderungen wurde Beispiel 5 wiederholt:
Statt 1 Mol DC wurde eine Mischung von 197 g (0,50 Mol) DC und 114 g (0,50 Mol) Bisphenol A und statt 0,90 Mol Terephthalsäuredichlorid ein Gemisch von je 91,4 g (0,45 Mol) Terephthal- und Isophthalsäuredichlorid mit zusätzlich 9,1 g (0,044 Mol) Isooctylphenol eingesetzt. Man erhielt nach Aufarbeitung wie in Beispiel 1 ein Polyestercarbonat mit ηᵣₑₗ = 1,312 (25°C, c = 5 g/l Lösung in CH₂Cl₂) und einer Glastemperatur von 282°C.

## Patentansprüche

1. Polyester und Polyestercarbonate aus
a) aromatischen Diphenolen einerseits und
b₁) aliphatischen und/oder cycloaliphatischen und/oder aromatischen Dicarbonsäuren und gegebenenfalls
b₂) Kohlensäure,
enthaltend b₁) in einer Menge von 5 bis 100 Mol-% und gegebenenfalls b₂) in einer Menge von 0 bis 95 Mol-%, bezogen auf (b₁ + b₂), worin a) zu 10 bis 100 Mol-% aus 3,8-Dihydroxy-5a,10b-diphenylcumarano-2',3',2,3-cumaran der Formel (I) 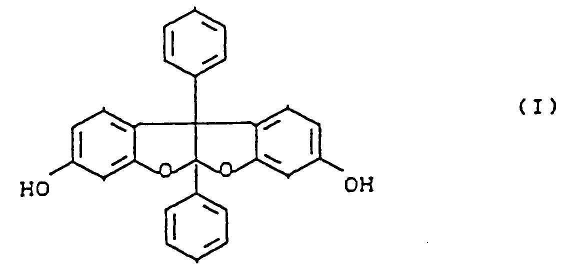 besteht.

## Claims

1. Polyesters and polyester carbonates of
a) aromatic diphenols on the one hand and
b₁) aliphatic and/or cycloaliphatic and/or aromatic dicarboxylic acids and optionally
b₂) carbonic acid,
containing b₁) in a quantity of 5 to 100 mole-% and optionally b₂) in a quantity of 0 to 95 mole-%, based on (b₁ + b₂), in which 10 to 100 mole-% of a) consists of 3,8-dihydroxy-5a,10b-diphenylcoumarano-2',3',2,3-coumarane corresponding to formula (I):

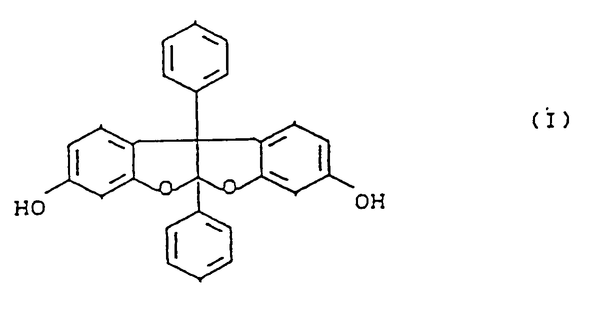

## Revendications

1. Polyester et polyestercarbonate, formés à partir de :
a) des diphénols aromatiques d'une part et
b₁) des acides dicarboxyliques aliphatiques et/ou cycloaliphatiques et/ou aromatiques et éventuellement
b₂) de l'acide carbonique,
contenant b₁) en une quantité de 5 à 100 mol% et éventuellement b₂) à une quantité de 0 à 95 mol%, par rapport à (b₁ + b₂), la fraction a) consistant pour 10 à 100 mol% en du 3,8-dihydroxy-5a,10b-diphénylcoumarano-2',3',2,3-coumarane de formule (I)
